# EUROPEAN PATENT SPECIFICATION

(11) **EP 1 922 377 B1**
(45) Date of publication and mention of the grant of the patent: **12.10.2011**
(21) Application number: 06800729.3
(22) Date of filing: 03.08.2006
(51) Int. Cl.: C09J 7/00

(54) **HEAT-TRANSFERRING ADHESIVE TAPE WITH IMPROVED FUNCTIONALITY**
THERMOTRANSFERKLEBEBAND MIT VERBESSERTER FUNKTIONALITÄT
BANDE ADHESIVE A TRANSFERT THERMIQUE PRESENTANT UNE FONCTIONNALITE AMELIOREE

(30) Priority: 05.08.2005 KR 20050071620
(43) Date of publication of application: 21.05.2008
(73) Proprietor: 3M Innovative Properties Company, St. Paul, MN 55133-3427 (US)
(72) Inventor: KIM, You-Hoon, Seoul 150-010 (KR); MOON, Sungpil, Seoul 150-010 (KR)
(74) Representative: Reinhard - Skuhra - Weise & Partner GbR
(86) International application number: PCT/US2006/030352
(87) International publication number: WO 2007/019261

(56) References cited:
- WO-A-2004/108851

## Description

### Technical Field

The present invention relates to an adhesive tape including a first adhesive layer and a second adhesive layer, wherein the first adhesive layer has a porous structure and contains a heat conductive filler, and the second adhesive layer has a non-porous structure.

### Background Art

In general, most electronic products including display devices include a combination of several different materials. Also, various adhesives having different levels of thickness and different characteristics have been used to assemble such electronic products so that the materials can perform their functions smoothly. An adhesive applied to electronic products is required to have not only a function of bonding heterogeneous materials but also heat conductivity, electromagnetic wave shielding property (electroconductivity) or electromagnetic wave absorbing property so that the materials to be bonded with each other can perform their unique functions satisfactorily.

To satisfy the above requirements, the adhesive may include various kinds of fillers. For example, a heat conductive filler, an electromagnetic wave shielding filler or an electromagnetic wave absorbing filler may be used. However, use of such fillers in the adhesive causes a problem of degradation in the adhesion level of the adhesive.

In order to improve the adhesion of the adhesive, and to ensure the adhesion area of the adhesive when a large area of adhesion is required, it is necessary to improve the wettability of the adhesive.

The methods of improving the wettability of an adhesive include forming a porous structure inside the adhesive. For example, a foamable filler (a foaming agent) is added to the adhesive and then the adhesive is foamed during the fabrication thereof. By doing so, pores are formed in the adhesive upon the foaming, and the pores increase the softness of the adhesive, and also increase the wettability of the adhesive. As a result, when the adhesive is pressurized to perform adhesion after applying the adhesive, the adhesive has improved dispersibility, and shows an excellent close adhesion property even to an irregular surface, thereby increasing the adhesion area.

However, when pores are formed in the adhesive in order to improve the wettability as described above, the resultant adhesive shows a drop in the heat conductivity, electroconductivity, or the like, and causes degradation in the electromagnetic wave shielding property or electromagnetic wave absorbing property, due to the porous structure formed in the adhesive. As a result, even if fillers such as heat conductive fillers, electroconductive fillers or electromagnetic wave shielding fillers are added to the adhesive, it is not possible to improve the heat conductivity, electroconductivity, electromagnetic wave shielding property or electromagnetic wave absorbing property of the.adhesive due to the presence of the aforementioned porous structure.

WO 2004/108851 A1 discloses a thermal interface material comprising a foamed film and at least one adhesive skin layer attached to said foamed film.

### Summary

Therefore, the present invention has been made in view of the above-mentioned problems. The inventors of the present invention have conducted studies to provide an adhesive having excellent heat conductivity, electroconductivity, electromagnetic wave shielding property or electromagnetic wave absorbing property, while maintaining excellent wettability and adhesion strength. As a result, the inventors of the present invention have found that a multilayer adhesive including several layers having different functions can provide the above characteristics. The present invention is based on this finding.

Therefore, it is an object of the present invention to provide an adhesive having excellent heat conductivity, electroconductivity, electromagnetic wave shielding property or electromagnetic wave absorbing property, while maintaining excellent wettability and adhesion strength.

It is another object of the present invention to provide an adhesive tape having multiple adhesive layers.

It is still another object of the present invention to provide a method for preparing the above adhesive tape.

According to an aspect of the present invention, there is provided an adhesive tape including: a first adhesive layer formed of a porous structured adhesive polymer resin and containing a heat conductive filler; and a second adhesive layer formed of a non-porous structured adhesive polymer resin and containing at least one filler selected from the group consisting of an electromagnetic wave shielding filler and an electromagnetic wave absorbing filler, and a primer layer between the first adhesive layer and the second adhesive layer.

In the adhesive tape according to the present invention, the first adhesive layer mainly serves to impart adhesive property and heat conductivity to the adhesive tape, while the second adhesive layer containing a specific functional filler serves to impart electromagnetic wave shielding property or electromagnetic wave absorbing property to the adhesive tape.

In general, electromagnetic wave shielding property of an adhesive tape is accomplished by electroconductivity of the adhesive tape. Hence, as used herein, the term "electromagnetic wave shielding property" also includes electroconductivity. Additionally, as used herein, the term "electromagnetic wave shielding filler" includes an electroconductive filler.

According to another aspect of the present invention, there is provided a method for preparing an adhesive tape including the steps of:
i) forming a first adhesive layer having a porous structure and containing a heat conductive filler; and being in a state of a syrup with a viscosity of 1000 to 20000 clsj
ii) forming a second adhesive layer, containing an adhesive polymer resin and at least one filler selected from the group consisting of an electromagnetic wave shielding filler and an electromagnetic wave absorbing filler, on the first adhesive layer to provide a laminate of the first adhesive layer with the second adhesive layer; and being in a state of a syrup with a viscosity of 1000 to 20000 clsj and
iii) curing the laminate.

According to the above method, the first adhesive layer and the second adhesive layer in steps i) and ii) are semi-cured or non-cured syrup.

According to still another aspect of the present invention, there is provided a method for preparing an adhesive tape including the steps of:
i) forming a first adhesive layer having a porous structure and containing a heat conductive filler;
ii) coating a composition for forming a second adhesive layer, containing an adhesive polymer resin and at least one filler selected from the group consisting of an electromagnetic wave shielding filler and an electromagnetic wave absorbing filler, on a release sheet and curing the composition to form a second adhesive layer; and
iii) laminating the second adhesive layer of step ii) on the first adhesive layer of step i).

Preferably, the method further includes a step of curing the adhesive polymer resin in step i).

Additionally, the adhesive tape may further include a primer layer 3 between the first adhesive layer and the second adhesive layer to enhance the adhesion strength between the first adhesive layer and the second adhesive layer.

Meanwhile, the adhesive tape may further includes an adhesion-enhancement layer 4 in the form of a thin adhesive layer on the second adhesive layer to enhance the adhesion strength of the second adhesive layer.

In the above methods, the first adhesive layer and the second adhesive layer may be laminated to each other after they are completely cured (for example, in the second method). Otherwise, the first adhesive layer and the second adhesive layer may be laminated to each other in a syrup state having a viscosity of about 1000 cPs to 20000 cPs (for example, in the first method).

According to yet another aspect of the present invention, there is provided a plasma display panel (PDP) fabricated by using the adhesive tape. More particularly, the present invention provides a PDP including a glass panel and a heat sink bound to each other by way of the adhesive tape according to the present invention.

### Brief Description of the Drawings

The foregoing and other objects, features and advantages of the present invention will become more apparent from the following detailed description when taken in conjunction with the accompanying drawings in which:
FIG. 1 is a sectional view showing an adhesive tape according to a preferred embodiment of the present invention;
FIG. 2 is a sectional view showing an adhesive tape according to another preferred embodiment of the present invention, the adhesive tape including a primer layer 3 between the first adhesive layer and the second adhesive layer in order to improve the interlayer adhesion;
FIG. 3 is a sectional view showing an adhesive tape according to still another preferred embodiment of the present invention, the adhesive tape including an adhesion-enhancement layer disposed on the second adhesive layer in order to improve the adhesion strength of the second adhesive layer;

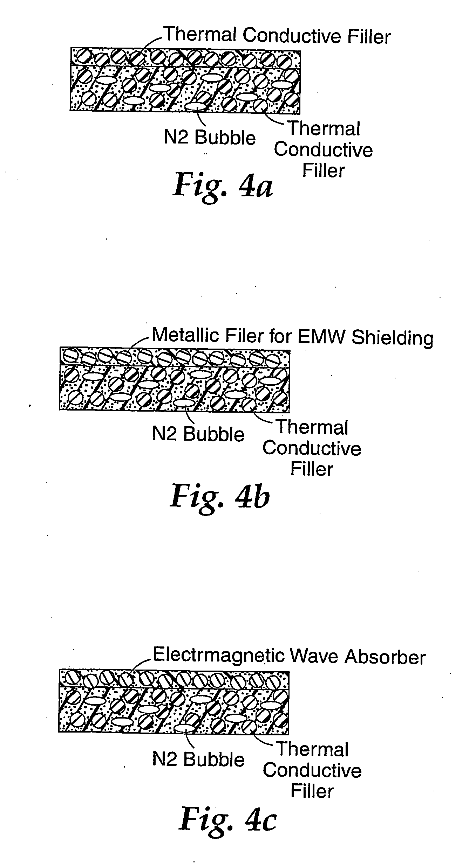

FIGs. 4a, 4b and 4c are sectional views showing the structure of an adhesive according to the present invention, wherein FIG. 4a illustrates an adhesive tape having heat conductivity, FIG. 4b illustrates an adhesive tape having heat conductivity and electromagnetic wave shielding property, and FIG. 4c illustrates an adhesive tape having heat conductivity and electromagnetic wave absorbing property;

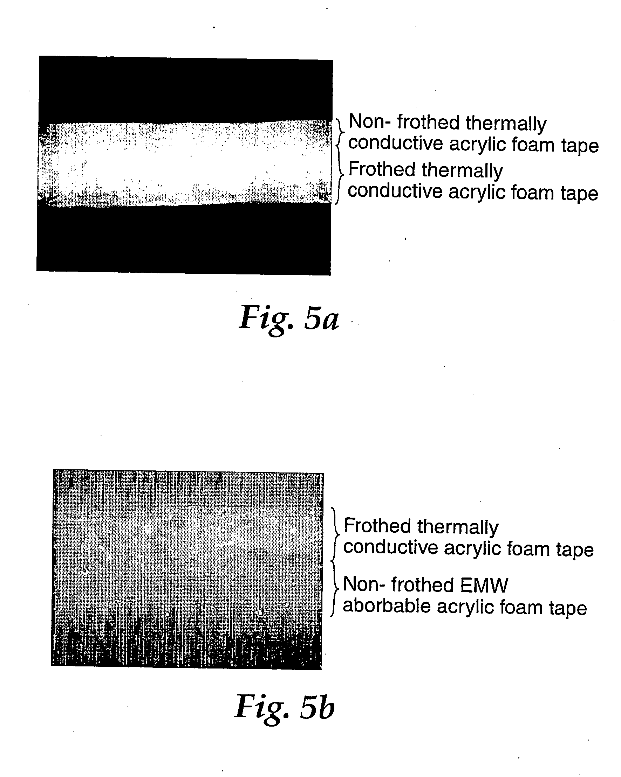

FIGs. 5a and 5b are photographic views showing the section of an adhesive tape according to the present invention, taken by scanning electron microscopy, wherein FIG. 5a illustrates an adhesion tape having heat conductivity, and FIG. 5b illustrates an adhesion tape having heat conductivity and electromagnetic wave absorbing property;
FIG. 6 is a schematic view showing a step of laminating the first adhesive layer having a porous structure with the second adhesive layer having a non-porous structure during the manufacture of the adhesive tape according to the present invention;
FIG. 7 is a schematic view showing an embodiment of the application of the adhesive tape according to the present invention in a step of attaching a glass panel to an aluminum frame during a process for fabricating a PDP (plasma display panel);

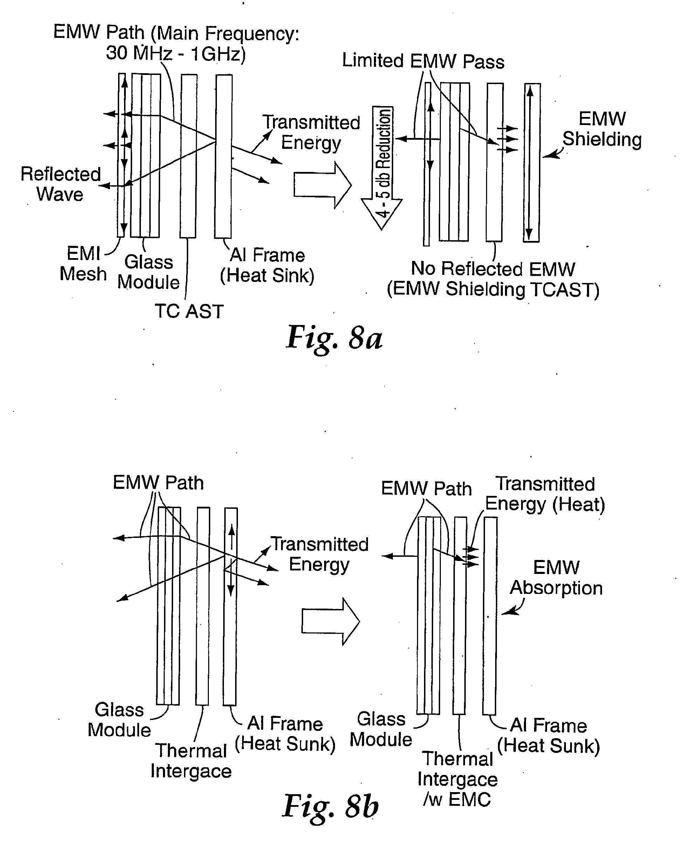

FIG. 8a is a schematic view showing how electromagnetic waves are generated and emitted (see the left side) and how electromagnetic waves are shielded (see the right side) in a PDP, to which the adhesive tape according to the present invention is applied;
FIG. 8b is a schematic view showing how electromagnetic waves are generated and emitted (see the left side) and how electromagnetic waves are absorbed (see the right side) in the same PDP as shown in FIG. 8a; and
FIG. 9 is a photographic view showing an interrelation between adhesion and wettability in an adhesive tape having a non-porous structure and in an adhesive tape having a porous structure, when attaching a glass panel to an aluminum frame in a PDP.

### Detailed Description of the Invention

Hereinafter, the present invention will be explained in more detail.

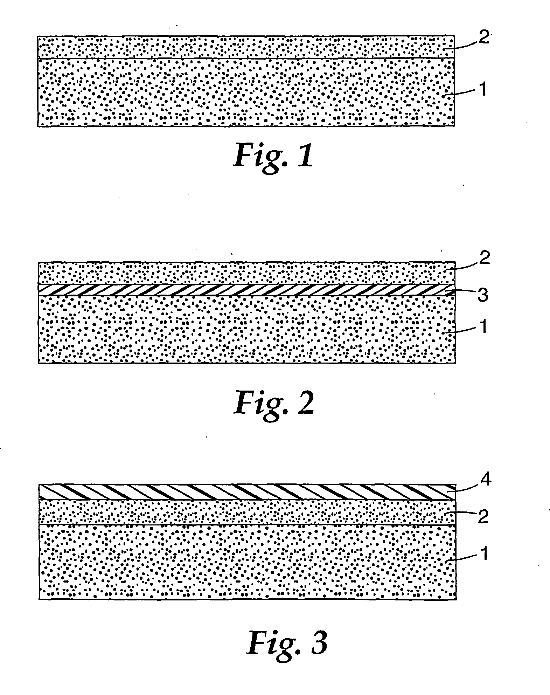

The adhesive tape according to the present invention includes a first adhesive layer and a second adhesive layer disposed on the first adhesive layer. Each of FIGS. 1 to 3 illustrates the structure of the adhesive tape according to the present invention. FIG. is a sectional view showing the adhesive tape including a first adhesive layer 1 and a second adhesive layer 2 disposed on one surface of the first adhesive layer. FIG. 2 is a sectional view showing the adhesive tape including a first adhesive layer, a second adhesive layer, and a primer layer 3 disposed between the first adhesive layer and the second adhesive layer in order to improve the interlayer adhesion strength. Meanwhile, FIG. 3 is a sectional view showing the adhesive tape including a first adhesive layer, a second adhesive layer, and an adhesion-enhancement layer 4 disposed on the second adhesive layer in order to improve the adhesion strength of the second adhesive layer.

The primers that may be used to form the primer layer 3 include a polyurethane resin, a polyacrylate resin, a polyolefin chloride resin and a polyamide resin, and a polyamide resin is preferred. The primer layer may have a thickness of about 0.1 to about 50µm, preferably about 0.5 to about10 µm.

Meanwhile, the adhesion-enhancement layer 4 formed on the second adhesive layer to enhance the adhesion strength of the second adhesive layer is formed of an adhesive polymer resin containing no fillers so as to maximize the adhesion strength. Preferably, the adhesion-enhancement layer may be formed of an acrylic adhesive resin. The adhesion-enhancement layer may have a thickness of about 10 to about 50 µm.

In the adhesive tape according to the present invention, the first adhesive layer has a porous structure in order to improve the adhesive property and wettability of the adhesive tape. To provide the first adhesive layer with a porous structure during the preparation thereof, the method according to the present invention may further include a mechanical frothing step carried out by injecting air, CO₂ or N₂ gas. Due to the porous structure, the first adhesive layer has an increased wettability and softness, and thus can be adhered more closely to various surfaces, including rough surfaces. Additionally, the first adhesive layer also has an improved vibration absorbing property. Meanwhile, a heat conductive filler is used in the first adhesive layer. The heat conductive filler permits the first adhesive layer to show heat conductivity. Such a heat conductive property is effective for heat transfer or heat emission in electronic products.

The first adhesive layer may further include any other functional additives as long as they have no adverse effects on the operation of a product comprising various members assembled by the adhesive tape. Non-limiting examples of the additives include a flame retardant, an antistatic agent, a porosity imparting agent, a pigment, an antioxidant, a UV stabilizer, a dispersant, a thickening agent, a plasticizer, a tackifying resin, a binder, a glazing agent, a surfactant, or the like.

According to an embodiment of the present invention, the first adhesive layer may be formed of a heat conductive pressure-sensitive adhesive obtained by mixing an acrylic resin with a heat conductive filler and curing the mixture.

The first adhesive layer may have a density of about 0.5 to about 1.5, preferably about 0.8 to about 1.2. Additionally, the first adhesive layer preferably has a hardness of about 20 to about 35 as measured by Asker C. Further, the first adhesive layer has a pore volume of about 20 to about 50%, preferably about 30 to about 40%.

In the adhesive tape according to the present invention, the first adhesive layer imparts fundamental physical properties, including adhesion strength, adhesion maintenance, flexibility and heat conductivity, to the adhesive tape, while the second adhesive layer imparts a certain functionality to the adhesive tape.

The second adhesive layer forming the adhesive tape according to the present invention has a non-porous structure. In other words, unlike the first adhesive layer, the second adhesive layer is not subjected to a step of forming a porous structure during the preparation thereof.

The second adhesive layer includes at least one functional filler in order to improve the quality of a product to which the adhesive tape according to the present invention is applied. Such fillers include an electromagnetic wave shielding filler and an electromagnetic wave absorbing filler. In addition to the fillers, the second adhesive layer may further include other additives, such as a flame retardant, an antistatic agent, a porosity imparting agent, a pigment, an antioxidant, a UV stabilizer, a dispersant, a thickening agent, a plasticizer, a tackifying resin, a binder, a glazing agent, a surfactant, or the like.

According to an embodiment of the present invention, similar to the first adhesive layer, the second adhesive layer may be formed of an adhesive obtained by mixing an acrylic resin with the filler.

There is no particular limitation in the kind of the adhesive polymer resin for forming the first adhesive layer and the second adhesive layer, and any resin, currently used as an adhesive in the art, can be used. Particular examples of the adhesive polymer resin that may be used include silicone, acrylic or urethane adhesive polymer resins. Acrylic resins are preferred.

More particularly, one example of the acrylic resin includes a polymer obtained by copolymerization of a C1 to C12 alkyl methacrylate monomer with a polar comonomer copolymerizable with the monomer.

Non-limiting examples of the (meth)acrylate monomer include butyl (meth)acrylate, hexyl (meth)acrylate, n-octyl (meth)acrylate, isooctyl (meth)acrylate, 2-ethylhexyl (meth)acrylate, isononyl (meth)acrylate, or the like.

Non-limiting examples of the polar comonomer coplymerizable with the (meth)acrylate monomer include carboxyl group-containing monomers such as (meth)acrylic acid, maleic acid or fumaric acid, and nitrogen-containing monomers such as acrylamide, N-vinyl pyrrolidone or N-vinyl caprolactame. Such polar comonomers function to impart a cohesive force to the adhesive tape and to improve the adhesion strength of the adhesive tape.

In the adhesive polymer resin, there is no particular limitation in the ratio of the (meth)acrylate monomer to the polar comonomer. However, the (meth)acrylate monomer and the polar comonomer are used generally in a weight ratio of about 99 to about 80:1 to about 20. The acrylic resin can provide an adhesion strength required to be used as an adhesive in the above range.

Examples of the heat conductive filler that may be used in the present invention include metal oxides, metal hydroxides, metal nitrides, metal carbides, boron compounds, graphite, or the like. Particular examples of the heat conductive filler include Al(OH)₃, graphite, BN, Al₂O₃, silicon carbide, sendust (Al 6 wt%-Si 9 wt%-Fe 85 wt%), or a mixture thereof. However, heat conductive fillers that may be used in the present invention are not limited to the above examples. Particularly, graphite has an excellent surface diffusion property and surface heat transfer property due to its characteristic structure. Thus, graphite can provide an excellent effect when it is mixed with other heat conductive fillers.

The electromagnetic wave shielding filler that may be used in the present invention includes an electroconductive filler, and particular examples thereof include metal powder, metal alloy powder, metal-coated graphite, metal fiber, or the like. The fillers may be used alone or in combination. As the metal component of the fillers, nickel. may be used, particularly in the form of nickel powder or nickel-coated graphite.

The electromagnetic wave absorbing filler that may be used in the present invention includes metal powder, metal alloy powder, magnetic alloy, magnetic powder, carbonyl-iron powder, ferrite or iron-silicide. Particular examples of the electromagnetic wave absorbing filler include MPP Core (Mo2%-Ni81%-Fe17%), HiFlux Core (Ni48%-Fe52%), Sendust Core (A16%-Si9%-Fe85%), Iron core(Fe100%), or the like. The electromagnetic wave absorbing fillers may be used alone or in combination.

The electromagnetic wave absorbing filler is distinguished from the electromagnetic wave shielding filler by the fact that the former absorbs electromagnetic waves to convert them into a different form of energy, such as heat, while the latter allows electromagnetic waves to flow to a different direction.

According to the present invention, the filler may be used in an amount of about 10 to about 200 parts by weight based on 100 parts by weight of the adhesive polymer resin. If the filler is used in an amount less than 10 parts by weight, it is not possible to provide heat conductivity, electroconductivity, or electromagnetic wave shielding or absorbing property sufficiently. Meanwhile, if the filler is used in an amount greater than 200 parts by weight, the adhesive layer shows an increased level of hardness, a decreased level of adhesion and a reduced wettability to a substrate, resulting in a drop in the contact area of the adhesive tape. Although the fillers are not totally the same in the first adhesive layer and in the second adhesive layer in terms of kinds of fillers and amounts of fillers, the fillers are preferably used in an amount of about 20 to about 150 parts by weight based on 100 parts by weight of the adhesive polymer resin, each in the first adhesive layer and the second adhesive layer.

Meanwhile, the fillers preferably have a particle diameter of about 1 to about 100 µm. If the fillers have a particle diameter less than 1 µm, the fillers may fly in the work environment and may form agglomerates in the adhesive layer, thereby decreasing workability and showing a low adhesion strength. Meanwhile, if the fillers have a particle diameter greater than 100 µm, they may cause a drop in the adhesion due to the presence of large particles in the adhesive.

Although there is no particular limitation in the thickness of the adhesive tape, the adhesive tape preferably has a thickness of about 0.2mm to about 2.5mm. If the adhesive tape has a thickness less than 0.2mm, the adhesive tape shows a low contact area, and thus cannot provide a heat transfer effect between a heater and a heat transferring sheet or an electromagnetic wave shielding or absorbing effect sufficiently. If the adhesive tape has a thickness greater than 2.5mm, the adhesive tape needs a longer period of time to carry out heat transfer. Preferably, the adhesive tape does not have a large thickness more than needs, as long as it shows a desired level of adhesion strength, heat conductivity, electroconductivity or electromagnetic wave shielding property.

If the adhesive tape is too thin, it shows a low adhesion strength. In this case, there is difficulty in producing an adhesive tape having a uniform thickness. On the other hand, if the adhesive tape is too thick, it may not be applied to a target product because the adhesive tape is away from the thickness range acceptable by the product, causes degradation in the quality, such as heat conductivity, and increases the cost needed for manufacturing the product due to the use of an increased amount of materials for forming the adhesive tape.

According to a preferred embodiment of the present invention, the first adhesive layer has a thickness of about 0.1 to about 2.0mm, while the second adhesive layer has a thickness of about 0.1 to about 1.0mm. According to another preferred embodiment of the present invention, the first adhesive layer has a thickness corresponding of about 1 to about 2.5 times of the thickness of the second adhesive layer. Preferably; the first adhesive layer having a porous structure is thicker than the second adhesive layer having a non-porous structure, considering adhesion efficiency and functionality.

Hereinafter, the method for preparing the adhesive tape according to the present invention will be explained in more detail.

In one embodiment of the method, a first adhesive layer and a second adhesive layer are provided separately, each in the form of non-cured or semi-cured syrup, and then both adhesive layers are laminated and cured completely.

More particularly, the adhesive tape according to the present invention may be prepared by the method including the steps of:
i) forming a first adhesive layer having a porous structure and containing a heat conductive filler; and being in a state of a syrup with a viscosity of 1000 to 20000 clsj
ii) coating a composition for forming a second adhesive layer, containing an adhesive polymer resin and at least one filler selected from the group consisting of an electromagnetic wave shielding filler and an electromagnetic wave absorbing filler, on the first adhesive layer to provide a laminate of the first adhesive layer with the second adhesive layer; *and* a primer layer between the first adhesive layer and the second adhesive layer. and being in a state of a syrap with a viscosity of 1000 to 20000 cPsj and
iii) curing the laminate.

According to the above method, the non-cured second adhesive composition is coated onto the first adhesive layer before it is cured. Therefore, during the curing, a part of low-molecular weight materials present in the non-cured second adhesive composition diffuse into the surface layer of the first adhesive layer. As a result, after the completion of the curing, a network (crosslinked) structure is formed in the interface between the first adhesive layer and the second adhesive layer. Due to the aforementioned mechanism, excellent interlayer adhesion strength can be obtained between the first adhesive layer and the second adhesive layer without a separate primer layer for enhancing the adhesion between the first adhesive layer and the second adhesive layer. Therefore, the adhesive tape obtained by the above method causes no interfacial separation between the first adhesive layer and the second adhesive layer after it is subjected to a high-temperature maintenance test.

Meanwhile, an adhesion-enhancement layer 4, which is a thin adhesive layer, may be further laminated on the second adhesive layer in order to enhance the adhesion strength of the second adhesive layer (see FIG. 3).

In another embodiment of the method for preparing the adhesive tape according to the present invention, the first adhesive layer and the second adhesive layer are formed and cured separately, and then both layers are laminated.

More particularly, the adhesive tape according to the present invention can be obtained by the method including the steps of:
i) forming a first adhesive layer having a porous structure and containing a heat conductive filler;
ii) coating a composition for forming a second adhesive layer, containing an adhesive polymer resin and at least one filler selected from the group consisting of an electromagnetic wave shielding filler and an electromagnetic wave absorbing filler, on a release sheet and curing the composition to form a second adhesive layer; and
iii) laminating the second adhesive layer of step ii) on the first adhesive layer of step i).

Preferably, the method further includes a step of curing the adhesive polymer resin in step i).

Preferred examples of the release sheet that may be used in the above method include plastic release films, release paper, non-woven cloth, glass and metals, and a polyethylene terephthalate (PET) release film is more preferred.

Meanwhile, the method may further include a step of laminating a primer layer 3 between the first adhesive layer and the second adhesive layer in order to enhance the interlayer adhesion strength, so that the first adhesive layer and the second adhesive layer can be laminated with the primer layer interposed between both adhesive layers (see FIG. 2).

The primer that may be used to form the primer layer include a polyurethane resin, a polyacrylate resin, a polyolefin chloride resin or a polyamide resin, a polyamide resin being preferred. The primer layer has a thickness of about 0.1 to about 50 µm, preferably about 0.5 to about 10 µm.

To form the primer layer, a roll coating process or a die coating process may be used. According to an embodiment of the present invention, the primer layer is coated onto the second adhesive layer via a roll coating process and then the primer layer-coated second adhesive layer is laminated with the first adhesive layer (FIG. 2).

In the same manner as described above, an adhesion-enhancement layer 4, which is a separate thin adhesive layer, may be further laminated on the second adhesive layer in order to enhance the adhesion strength of the second adhesive layer (FIG. 3).

Meanwhile, any curing processes generally known to those skilled in the art, including heat curing or UV curing processes, may be applied to the present invention. Since the characteristics of an adhesion tape and those of each layer forming the adhesive tape depend on the curing process used to manufacture the adhesion tape, a suitable curing process is preferably selected considering the type of the product to which the adhesive tape is applied and physical properties needed for the product.

For example, a heat curing process using a solvent permits production of a thin adhesion pad, while a UV curing process using no solvent is environmentally-friendly.

The adhesive polymer resin forming the adhesive tape according to the present invention may be prepared by a conventional method for preparing a polymer adhesive.

In general, the adhesive polymer resin is formed by the polymerization of monomers. Particularly, monomers for forming the adhesive polymer resin are mixed with fillers for imparting desired physical properties to the adhesive tape according to the present invention, additives are added, if necessary, and then the monomers are polymerized to form the first adhesive layer and the second adhesive layer. Then, both adhesive layers are laminated, before or after they are cured, to provide the adhesive tape. It is a matter of course that a polymerization initiator, a crosslinking agent, etc. may be further added during the preparation of the adhesive composition.

Preferably, in order to allow the fillers and other additives to be dispersed uniformly into the adhesive composition, the monomers for forming the adhesive polymer resin are prepolymerized to provide syrup, the fillers and other additive are added to the syrup, and the reaction mixture is agitated uniformly and then polymerized.

According to an embodiment of the present invention, monomers are partially polymerized by way of radical polymerization using a photoinitiator to provide non-cured or semi-cured syrup having a viscosity of about 1000 to about 20,000 cPs, and the fillers and other additives are added to the syrup to form the first adhesive layer and the second adhesive layer. Then, the first adhesive layer and the second adhesive layer are laminated, before or after they are cured, to provide the adhesive tape.

To form the first adhesive layer, a step of forming a porous structure is required. The porous structure-forming step is also carried out after forming non-cured or semi-cured syrup having a viscosity of about 1000 to about 20,000 cPs. In other words, the heat conductive filler is mixed with the syrup having a viscosity of about 1000 to about 20,000 cPs, and then the mixture is subjected to a mechanical frothing process including injection of air, CO₂ or N₂ gas, thereby forming a porous structure.

Any polymerization processes generally known to those skilled in the art may be used to prepare the adhesive tape according to the present invention with no particular limitation, and particular examples of such processes include radical polymerization, solution polymerization, emulsion polymerization, suspension polymerization, photopolymerization and bulk polymerization. According to a preferred embodiment of the present invention, a photopolymerization process using a photoinitiator may be used.

It is possible to control the adhesive property of the adhesive tape according to the preparation by using a crosslinking agent during the manufacture of the adhesive tape. Preferably, the crosslinking agent is used in an amount of about 0.05 to about 5 parts by weight based on 100 parts by weight of the adhesive polymer resin. Particular examples of the crosslinking that may be used in the present invention include, but are not limited to multi-functional acrylates, including monomer type crosslinking agents such as 1,6-hexanediol diacrylate, trimethylolpropane triacrylate, pentaerythritol triacrylate, 1,2-ethyleneglycol diacrylate and 1,12-dodecanediol acrylate.

When a photoinitiator is used during the manufacture of the adhesive tape according to the present invention, it is possible to control the polymerization degree of the adhesive polymer resin by adjusting the amount of the photoinitiator. Preferably, the photoinitiator is used in an amount of about 0.01 to about 5 parts by weight based on 100 parts by weight of the adhesive polymer resin. Particular examples of the photoinitiator that may be used in the present invention include, but are not limited to 2,4,6-trimethylbenzoyldiphenyl phosphine oxide, bis(2,4,6-trimethylbenzoyl)phenyl phosphine oxide, α,α-methoxy-αhydroxyacetophenone, 2-benzoyl-2-(dimethylamino)-1-[4-(4-morphonyl)phenyl]-1-butanone, 2,2-dimethoxy-2-phenyl acetophenone, or the like.

The adhesive tape according to the present invention may further include other additives such as a pigment, an antioxidant, a UV stabilizer, a dispersant, a thickening agent, a plasticizer, a tackifying resin, a binder, or a glazing agent, as long as the additives have no adverse effects on the desired effect of the present invention.

The adhesive tape according to the present invention may be applied desirably to the fabrication of a PDP (plasma display panel). In other words, a PDP may be fabricated by attaching a heat sink to a glass panel by using the adhesive tape according to the present invention. As the heat sink, an aluminum heat sink is generally used.

Preferably, adhesion of the heat sink to the glass panel is performed in such a manner that the first adhesive layer and the second adhesive layer of the adhesive tape face to a glass panel and to a heat sink, respectively, in order to carry out the adhesion more efficiently. The glass panel, which is in contact with the first adhesive layer having excellent heat conductivity and wettability, serves to improve heat discharge characteristics and adhesion strength. Additionally, the heat sink, which is in contact with the second adhesive layer containing a heat conductive filler, an electromagnetic wave shielding filler or an electromagnetic wave absorbing filler, serves to reduce the effects of heat or electromagnetic waves.

### Preferred Embodiments of the Invention

Reference will now be made in detail to the preferred embodiments of the present invention. It is to be understood that the following examples are illustrative only and the present invention is not limited thereto.

In the following description, the weight of a material is expressed by the term "part," which means a relative weight based on the weight of the adhesive polymer resin taken as 100.

### Example 1

### 1) Preparation of Partially Polymerized Mixture

First, 95 parts (parts by weight based on 100 parts by weight of the adhesive polymer resin; the same shall apply hereinafter) of 2-ethylhexyl acrylate and 5 parts of acrylic acid as a polar comonomer were partially polymerized by using UV rays to obtain syrup having a viscosity of 3000 cPs. Next, 100 parts of the syrup were thoroughly mixed with 0.2 parts of α,α-methoxy-α-hydroxyacetophenone as a photoinitiator and 0.65 parts of 1,6-hexanediol diacrylate (HDDA) as a crosslinking agent, and the mixture was agitated sufficiently.

### 2) Preparation of First Adhesive Layer

The mixture obtained as described above was divided into two portions, one of which was mixed with 80 parts of aluminum trihydroxide (Al(OH)₃) having a particle diameter of 20 µm as a heat conductive filler. Then, N₂ gas was injected to the mixture and the mixture was subjected to a porous structure-forming (frothing) process by way of high-speed agitation. Then, the resultant mixture was applied on a release sheet to a thickness of 1 mm, thereby providing a first adhesive layer.

### 3) Preparation of Second Adhesive Layer

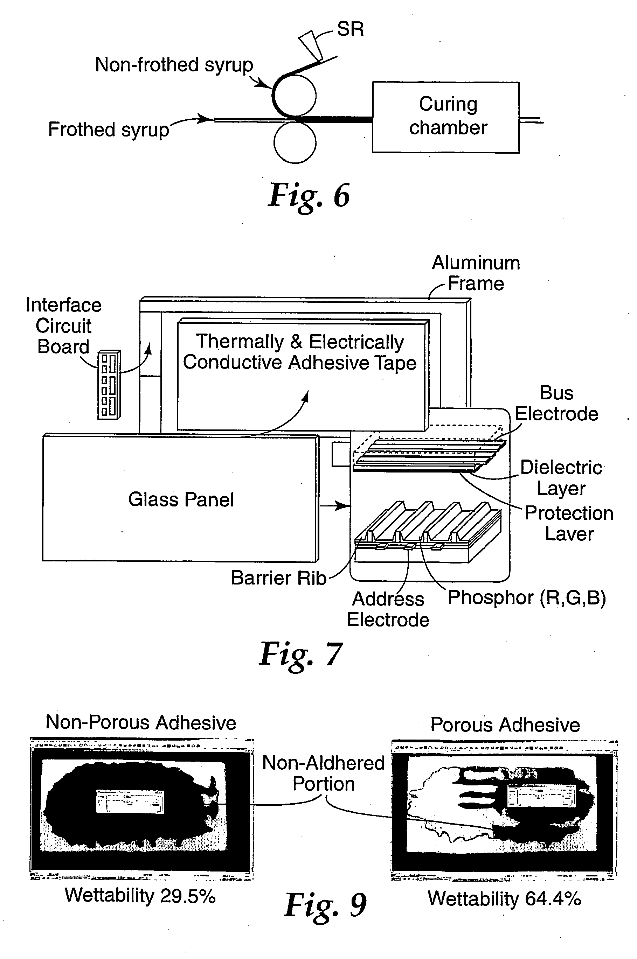

The partially polymerized mixture obtained in step 1) was mixed with 150 parts of aluminum trihydroxide (Al(OH)₃) as a heat conductive filler. Then, the mixture was thoroughly agitated to a uniform state, and debubbled under reduced pressure by using a vacuum pump. The resultant mixture was coated on the first adhesive layer via a roll coating process to a thickness of 0.5mm to form a second adhesive layer (see FIG. 6). At this time, the second adhesive layer was covered with a polyester film so as to interrupt oxygen.

### 4) Curing

To the laminate of the first adhesive layer with the second adhesive layer obtained from step 3), UV rays with an intensity of about 1 mW/cm² were irradiated by using a UV lamp for 5 minutes to cure the laminate, thereby providing an adhesive tape according to the present invention.

### Comparative Examples 1 and 2

The adhesive sheet according to Comparative Example 1 was obtained by forming the adhesive for forming the first adhesive layer in Example 1 into a sheet-like adhesive having a thickness of 1.5mm. The adhesive sheet according to Comparative Example 2 was obtained by forming the adhesive for forming the second adhesive layer into a sheet-like adhesive having a thickness of 1.5mm.

### Example 2

An adhesive tape was obtained in the same manner as Example 1, except that carbonyl-iron powder having a particle diameter of 50 µm was used as an electromagnetic wave absorbing filler instead of aluminum trihydroxide (Al(OH)₃) as a heat conductive filler, in order to prepare the second adhesive layer.

### Comparative Example 3

The adhesive sheet according to Comparative Example 3 was obtained by forming the adhesive for forming the second adhesive layer in Example 2 into a sheet-like adhesive having a thickness of 1.5mm.

### Example 3

An adhesive tape was obtained in the same manner as Example 1, except that nickel-coated graphite having a particle diameter of 50 µm was used as an electromagnetic wave shielding filler instead of aluminum trihydroxide (Al(OH)₃) as a heat conductive filler, in order to prepare the second adhesive layer.

### Comparative Example 4

The adhesive sheet according to Comparative Example 4 was obtained by forming the adhesive for forming the second adhesive layer in Example 3 into a sheet-like adhesive having a thickness of 1.5mm.

The following Table 1 shows the materials used in the above Examples and Comparative Examples.

**Table 1**

| | Heat conductive filler | Porous structure forming agent | Functional filler | Structure |
|---|---|---|---|---|
| Ex. 1 | Al(OH)₃ | N₂ bubble | Al(OH)₃ | Bilayer |
| Comp. Ex. 1 | Al(OH)₃ | N₂ bubble | - | Monolayer |
| Comp. Ex. 2 | - | - | Al(OH)₃ | Monolayer |
| Ex. 2 | Al(OH)₃ | N₂ bubble | Carbonyl-iron powder | Bilayer |
| Comp. Ex. 3 | - | - | Carbonyl-iron powder | Monolayer |
| Ex. 3 | Al(OH)₃ | N₂ bubble | Nickel-coated graphite | Bilayer |
| Comp. Ex. 4 | - | - | Nickel-coated graphite | Monolayer |

Each of the adhesive tapes according to Examples 1 to 3 and Comparative Examples 1 to 4 was measured for its heat conductivity, wettability, electromagnetic wave absorbing property and surface resistance. The results are shown in the following Table 2.

**Table 2**

| | Heat conductivity (W/mK) | Wettability (%) | Electromagnetic wave absorbing property dB at 300MHz | Electromagnetic wave shielding property Ω/□ |
|---|---|---|---|---|
| Ex. 1 | 0.554 | 63.2 | 0 | 1.42x10¹³ |
| Comp. Ex. 1 | 0.372 | 64.4 | 0 | 3.48x10¹⁴ |
| Comp. Ex. 2 | 0.658 | 29.5 | 0 | 4.83x10¹³ |
| Ex. 2 | 0.403 | 63.2 | 0.15 | 6.86x10¹⁰ |
| Comp. Ex. 3 | 0.412 | 8.5 | 0.20 | 1.48x10¹⁰ |
| Ex. 3 | 0.413 | 79 | 0.03 | 1.42x10² |
| Comp. Ex. 4 | 0.408 | 12 | 0.05 | 4.75x10³ |

As shown in Table 2, all of the adhesive tapes according to the present invention show excellent wettability. Because the second adhesive layer of the adhesive tape according to the present invention contain a functional filler, the adhesive tape shows excellent heat conductivity (Ex. 1) and electromagnetic wave absorbing property (Ex. 2), in addition to excellent wettability. In general, electromagnetic wave shielding property can be evaluated in terms of surface resistance. As the surface resistance decreases, electromagnetic wave shielding property increases. The adhesive tape according to the present invention, in particular the adhesive tape according to Example 3, which is provided to improve the electromagnetic wave shielding property, shows a low surface resistance while it contains a porous structured layer (first adhesive layer), and thus provides excellent electromagnetic wave shielding property.

### Industrial Applicability

As can be seen from the foregoing, the adhesive tape according to the present invention includes a laminate of a first adhesive layer having a porous structure and showing heat conductivity with a second adhesive layer having a desired functionality. The first adhesive layer imparts wettability as well as heat conductivity to the adhesive tape, so that the adhesive tape can provide excellent adhesive property and workability. The second adhesive layer imparts heat conductivity, electromagnetic wave shielding property and electromagnetic wave absorbing property to the adhesive tape. Therefore, the adhesive tape according to the present invention may be useful for the manufacture of electronic products, such as a plasma display panel, requiring an adhesive having electromagnetic wave-related functionalities in addition to heat conductivity and adhesive property.

While this invention has been described in connection with what is presently considered to be the most practical and preferred embodiment, it is to be understood that the invention is not limited to the disclosed embodiment and the drawings. On the contrary, it is intended to cover various modifications and variations within the scope of the appended claims.

## Claims

1. An adhesive tape comprising:
a first adhesive layer formed of a porous structured adhesive polymer resin and containing heat conductive filler; and
a second adhesive layer formed of a non-porous structured adhesive polymer resin and containing at least one filler, wherein the second adhesive layer contains at least one filler selected from the group consisting of an electromagnetic wave shielding filler and an electromagnetic wave absorbing filler; and a primer layer between the first adhesive layer and the second adhesive layer to enhance adhesion strength between the first adhesive layer and the second adhesive layer.

2. The adhesive tape according to claim 1, wherein the primer layer is formed of a resin selected from the group consisting of a polyurethane resin, a polyacrylate resin, a polyolefin chloride resin and a polyamide resin.

3. The adhesive tape according to claim 1, which further comprises an adhesion-enhancement layer on the second adhesive layer to enhance adhesion strength of the second adhesive layer.

4. The adhesive tape according to claim3, wherein the adhesion-enhancement layer is an adhesive layer formed of an acrylic adhesive resin and having a thickness of 10 to 50 µm.

5. The adhesive tape according to claim 1, wherein the porous structure of the first adhesive layer is structured by bubbles formed of at least one gas selected from the group consisting of air, N₂ and CO₂.

6. The adhesive tape according to claim 1, wherein the second adhesive layer contains an electromagnetic wave shielding filler.

7. The adhesive tape according to claim 6, wherein the heat conductive filler is selected from the group consisting of metal oxides, metal hydroxides, metal nitrides, metal carbides, boron compounds, graphite, silicon carbide and sendust.

8. The adhesive tape according to claim 6, wherein the electromagnetic wave shielding filler is selected from the group consisting of metal powder, metal alloy powder, metal coated graphite and metal fiber.

9. The adhesive tape according to claim 6, wherein the electromagnetic wave absorbing filler is selected from the group consisting of metal powder, metal alloy powder, magnetic alloy powder, magnetic powder, carbonyl-iron powder, ferrite, iron-silicide and sendust.

10. The adhesive tape according to claim 1, wherein the filler is contained in the first adhesive layer and the second adhesive layer in an amount of 10 to 200 parts by weight based on 100 parts by weight of the adhesive polymer resin.

11. The adhesive tape according to claim 1, wherein the filler has a particle diameter of 1 to 100 µm.

12. The adhesive tape according to claim 1, wherein the adhesive polymer resin is selected from the group consisting of a silicon-based resin, an acrylic resin and an urethane-based resin.

13. The adhesive tape according to claim 1, wherein the first adhesive layer has a thickness of 0.1 to 2.0 mm and the second adhesive layer has a thickness of 0.1 to 1.0 mm.

14. A method for preparing an adhesive tape comprising the steps of:
i) forming a first adhesive layer having a porous structure and containing a heat conductive filler; and being in a state of syrup with a viscosity of 1000 to 20000 cPs;
ii) forming a second adhesive layer, containing an adhesive polymer resin and at least one filler selected from the group consisting of an electromagnetic wave shielding filler and an electromagnetic wave absorbing filler, on the first adhesive layer to form a laminate of the first adhesive layer with the second adhesive layer; and being in a state of syrup with a viscosity of 1000 to 20000 cPs; and
iii) curing the laminate.

15. A method for preparing an adhesive tape comprising the steps of:
i) forming a first adhesive layer having a porous structure and containing a heat conductive filler;
ii) coating a composition for forming a second adhesive layer, containing an adhesive polymer resin and at least one filler selected from the group consisting of an electromagnetic wave shielding filler and an electromagnetic wave absorbing filler, on a release tape, and curing the composition to form a second adhesive layer; and
iii) laminating the second adhesive layer of step ii) on the first adhesive layer of step i).

16. The method according to claim 15, which further comprises a step of curing the adhesive polymer resin in step i).

17. The method according to claim 15, which further comprises a step of coating a primer layer on the second adhesive layer after step ii), so that the first adhesive layer and the second adhesive layer are laminated to each other with the primer layer interposed between both layers.

18. The method according to any one of claims 14 to 17, which further comprises a step of laminating an adhesion-enhancement layer on the second adhesive layer to enhance adhesion strength of the second adhesive layer.

19. A PDP (plasma display panel) comprising a glass panel and a heat sink, wherein the glass panel and the heat sink are adhered to each other by the adhesive tape as defined in any one of claims 1 to 13.

20. The PDP according to claim 19, wherein the adhesive tape is placed in such a manner that the first adhesive layer of the adhesive tape faces to the glass panel and the second layer of the adhesive tape faces to the heat sink.

## Patentansprüche

1. Klebeband, umfassend:
eine erste Klebstoffschicht, die aus einem porösen strukturierten Polymerklebharz ausgebildet ist und einen wärmeleitfähigen Füllstoff enthält; und eine zweite Klebstoffschicht, die aus einem nichtporösen strukturierten Polymerklebharz ausgebildet ist und mindestens einen Füllstoff enthält, wobei die zweite Klebstoffschicht mindestens einen Füllstoff aus der Gruppe bestehend aus gegen elektromagnetische Wellen abschirmendem Füllstoff und elektromagnetische Wellen absorbierendem Füllstoff enthält; und eine Primerschicht zwischen der ersten Klebstoffschicht und der zweiten Klebstoffschicht zur Verbesserung der Haftfestigkeit zwischen der ersten Klebstoffschicht und der zweiten Klebstoffschicht.

2. Klebeband nach Anspruch 1, wobei die Primerschicht aus einem Harz aus der Gruppe bestehend aus einem Polyurethanharz, einem Polyacrylatharz, einem Polyolefinchloridharz und einem Polyamidharz gebildet ist.

3. Klebeband nach Anspruch 1, das ferner eine Haftverbesserungsschicht auf der zweiten Klebstoffschicht zur Verbesserung der Haftfestigkeit der zweiten Klebstoffschicht umfaßt.

4. Klebeband nach Anspruch 3, wobei es sich bei der Haftverbesserungsschicht um eine Klebstoffschicht, die aus einem Acrylklebharz gebildet ist und eine Dicke von 10 bis 50 µm aufweist, handelt.

5. Klebeband nach Anspruch 1, wobei die poröse Struktur der ersten Klebstoffschicht durch Blasen, die aus mindestens einem Gas aus der Gruppe bestehend aus Luft, N₂ und CO₂ gebildet sind, strukturiert ist.

6. Klebeband nach Anspruch 1, wobei die zweite Klebstoffschicht einen gegen elektromagnetische Wellen abschirmenden Füllstoff enthält.

7. Klebeband nach Anspruch 6, wobei der wärmeleitfähige Füllstoff aus der Gruppe bestehend aus Metalloxiden, Metallhydroxiden, Metallnitriden, Metallcarbiden, Borverbindungen, Graphit, Siliciumcarbid und Sendust ausgewählt ist,

8. Klebeband nach Anspruch 6, wobei der gegen elektromagnetische Wellen abschirmende Füllstoff aus der Gruppe bestehend aus Metallpulver, Metallegierungspulver, metallbeschichtetem Graphit und Metallfaser ausgewählt ist.

9. Klebeband nach Anspruch 6, wobei der elektromagnetische Wellen absorbierende Füllstoff aus der Gruppe bestehend aus Metallpulver, Metallegierungspulver, Magnetlegierungspulver, Magnetpulver, Carbonyleisenpulver, Ferrit, Eisensilicid und Sendust ausgewählt ist.

10. Klebeband nach Anspruch 1, wobei der Füllstoff in der ersten Klebstoffschicht und der zweiten Klebstoffschicht in einer Menge von 10 bis 200 Gewichtsteilen, bezogen auf 100 Gewichtsteile des Polymerklebharzes, enthalten ist.

11. Klebeband nach Anspruch 1, wobei der Füllstoff einen Teilchendurchmesser von 1 bis 100 µm aufweist.

12. Klebeband nach Anspruch 1, wobei das Polymerklebharz aus der Gruppe bestehend aus einem Harz auf Siliciumbasis, einem Acrylharz und einem Harz auf Urethanbasis ausgewählt ist.

13. Klebeband nach Anspruch 1, wobei die erste Klebstoffschicht eine Dicke von 0,1 bis 2,0 mm aufweist und die zweite Klebstoffschicht eine Dicke von 0,1 bis 1,0 mm aufweist.

14. Verfahren zur Herstellung eines Klebebands, bei dem man:
i) eine erste Klebstoffschicht, die eine poröse Struktur aufweist, einen wärmeleitfähigen Füllstoff enthält und im Sirupzustand mit einer Viskosität von 1000 bis 20.000 cPs vorliegt, bildet;
ii) auf der ersten Klebstoffschicht eine zweite Klebstoffschicht, die ein Polymerklebharz und mindestens einen Füllstoff aus der Gruppe bestehend aus gegen elektromagnetische Wellen abschirmendem Füllstoff und elektromagnetische Wellen absorbierendem Füllstoff enthält und im Sirupzustand mit einer Viskosität von 1000 bis 20.000 cPs vorliegt, bildet, wobei man ein Laminat der ersten Klebstoffschicht mit der zweiten Klebstoffschicht erhält; und
iii) das Laminat härtet.

15. Verfahren zur Herstellung eines Klebebands, bei dem man:
i) eine erste Klebstoffschicht, die eine poröse Struktur aufweist und einen wärmeleitfähigen Füllstoff enthält, bildet;
ii) eine Zusammensetzung zur Bildung einer zweiten Klebstoffschicht, die ein Polymerklebharz und mindestens einen Füllstoff aus der Gruppe bestehend aus gegen elektromagnetische Wellen abschirmendem Füllstoff und elektromagnetische Wellen absorbierendem Füllstoff enthält, auf ein Ablöseband aufträgt und die Zusammensetzung härtet, wobei man eine zweite Klebstoffschicht erhält; und
iii) die zweite Klebstoffschicht aus Schritt ii) auf die erste Klebstoffschicht auflaminiert.

16. Verfahren nach Anspruch 15, bei dem man ferner das Polymerklebharz in Schritt i) härtet.

17. Verfahren nach Anspruch 15, bei dem man ferner nach Schritt ii) eine Primerschicht auf die zweite Klebstoffschicht aufträgt, so daß die erste Klebstoffschicht und die zweite Klebstoffschicht mit der Primerschicht dazwischen aufeinanderlaminiert werden.

18. Verfahren nach einem der Ansprüche 14 bis 17, bei dem man ferner auf die zweite Klebstoffschicht eine Haftverbesserungsschicht zur Verbesserung der Haftfestigkeit der zweiten Klebstoffschicht auflaminiert.

19. PDP (Plasmabildschirm) mit einer Glasplatte und einem Wärmeableiter, wobei die Glasplatte und der Wärmeableiter durch das Klebeband gemäß einem der Ansprüche 1 bis 13 aneinandergeklebt sind.

20. PDP nach Anspruch 19, wobei das Klebeband so angeordnet ist, daß die erste Klebstoffschicht des Klebebands der Glasplatte zugewandt ist und die zweite Schicht des Klebebands dem Wärmeableiter zugewandt ist.

## Revendications

1. Ruban adhésif comprenant :
une première couche adhésive constituée d'une résine polymère adhésive à structure poreuse et contenant une charge thermoconductrice ; et
une deuxième couche adhésive constituée d'une résine polymère adhésive à structure non poreuse et contenant au moins une charge, la deuxième couche adhésive contenant au moins une charge choisie dans le groupe constitué par une charge faisant écran aux ondes électromagnétiques et une charge absorbant les ondes électromagnétiques ; et
une couche d'apprêt entre la première couche adhésive et la deuxième couche adhésive pour améliorer la force d'adhérence entre la première couche adhésive et la deuxième couche adhésive.

2. Ruban adhésif selon la revendication 1, dans lequel la couche d'apprêt est constituée d'une résine choisie dans le groupe constitué par une résine de polyuréthane, une résine de polyacrylate, une résine de chlorure de polyoléfine et une résine de polyamide.

3. Ruban adhésif selon la revendication 1, qui comprend en outre une couche d'amélioration de l'adhérence sur la deuxième couche adhésive pour améliorer la force d'adhérence de la deuxième couche adhésive.

4. Ruban adhésif selon la revendication 3, dans lequel la couche d'amélioration de l'adhérence est une couche adhésive constituée d'une résine adhésive acrylique et ayant une épaisseur de 10 à 50 µm.

5. Ruban adhésif selon la revendication 1, dans lequel la structure poreuse de la première couche adhésive est structurée par des bulles formées par au moins un gaz choisi dans le groupe constitué par l'air, l'azote et le CO₂.

6. Ruban adhésif selon la revendication 1, dans lequel la deuxième couche adhésive contient une charge faisant écran aux ondes électromagnétiques.

7. Ruban adhésif selon la revendication 6, dans lequel la charge thermoconductrice est choisie dans le groupe constitué par les oxydes métalliques, les hydroxydes métalliques, les nitrures métalliques, les carbures métalliques, les composés du bore, le graphite, le carbure de silicium et le Sendust.

8. Ruban adhésif selon la revendication 6, dans lequel la charge faisant écran aux ondes électromagnétiques est choisie dans le groupe constitué par une poudre métallique, une poudre d'alliage métallique, du graphite recouvert de métal et une fibre métallique.

9. Ruban adhésif selon la revendication 6, dans lequel la charge absorbant les ondes électromagnétiques est choisie dans le groupe constitué par une poudre métallique, une poudre d'alliage métallique, une poudre d'alliage magnétique, une poudre magnétique, une poudre de fer carbonyle, la ferrite, le siliciure de fer et le Sendust.

10. Ruban adhésif selon la revendication 1, dans lequel la charge est contenue dans la première couche adhésive et la deuxième couche adhésive dans une quantité de 10 à 200 parties en poids, rapporté à 100 parties en poids de la résine polymère adhésive.

11. Ruban adhésif selon la revendication 1, dans lequel la charge a un diamètre de particules de 1 à 100 µm.

12. Ruban adhésif selon la revendication 1, dans lequel la résine polymère adhésive est choisie dans le groupe constitué par une résine à base de silicium, une résine acrylique et une résine à base d'uréthane.

13. Ruban adhésif selon la revendication 1, dans lequel la première couche adhésive a une épaisseur de 0,1 à 2,0 mm et la deuxième couche adhésive a une épaisseur de 0,1 à 1,0 mm.

14. Procédé pour préparer un ruban adhésif comprenant les étapes consistant à :
i) former une première couche adhésive ayant une structure poreuse et contenant une charge thermoconductrice ; et étant dans un état de sirop avec une viscosité de 1000 à 20 000 cP ;
ii) former une deuxième couche adhésive, contenant une résine polymère adhésive et au moins une charge choisie dans le groupe constitué par une charge faisant écran aux ondes électromagnétiques et une charge absorbant les ondes électromagnétiques, sur la première couche adhésive pour former un stratifié de la première couche adhésive avec la deuxième couche adhésive ; et étant dans un état de sirop avec une viscosité de 1000 à 20 000 cP ; et
iii) durcir le stratifié.

15. Procédé pour préparer un ruban adhésif comprenant les étapes consistant à :
i) former une première couche adhésive ayant une structure poreuse et contenant une charge thermoconductrice ;
ii) déposer une composition pour former une deuxième couche adhésive, contenant une résine polymère adhésive et au moins une charge choisie dans le groupe constitué par une charge faisant écran aux ondes électromagnétiques et une charge absorbant les ondes électromagnétiques, sur une bande détachable, et durcir la composition pour former une deuxième couche adhésive ; et
iii) laminer la deuxième couche adhésive de l'étape ii) sur la première couche adhésive de l'étape i).

16. Procédé selon la revendication 15, qui comprend en outre une étape consistant à durcir la résine polymère adhésive à l'étape i).

17. Procédé selon la revendication 15, qui comprend en outre une étape consistant à déposer une couche d'apprêt sur la deuxième couche adhésive après l'étape ii), de telle sorte que la première couche adhésive et la deuxième couche adhésive sont laminées l'une à l'autre avec la couche d'apprêt intercalée entre les deux couches.

18. Procédé selon l'une quelconque des revendications 14 à 17, qui comprend en outre une étape consistant à laminer une couche d'amélioration de l'adhérence sur la deuxième couche adhésive pour améliorer la force d'adhérence de la deuxième couche adhésive.

19. Écran plasma comprenant un panneau de verre et un dissipateur thermique, dans lequel le panneau de verre et le dissipateur thermique sont collés l'un à l'autre par le ruban adhésif tel que défini dans l'une quelconque des revendications 1 à 13.

20. Écran plasma selon la revendication 19, dans lequel le ruban adhésif est placé de telle manière que la première couche adhésive du ruban adhésif fait face au panneau de verre et la deuxième couche du ruban adhésif fait face au dissipateur thermique.
